# FASCICULE DE BREVET EUROPEEN

(11) **EP 0 568 517 B1**
(45) Date de publication et mention de la délivrance du brevet: **27.03.1996**
(21) Numéro de dépôt: 93870071.3
(22) Date de dépôt: 27.04.1993
(51) Int. Cl.: A01K 1/00, F24F 7/10

(54) **Déflecteur d'admission d'air approprié à la ventilation d'une étable**
Lufteinlassableiter für Tierställe
Air inlet deflector for the ventilation in stables

(30) Priorité: 28.04.1992 BE 9200384
(43) Date de publication de la demande: 03.11.1993
(73) Titulaire: Vervaeke, Geert, B-8755 Ruiselede (BE)
(72) Inventeur: Vervaeke, Geert, B-8755 Ruiselede (BE)
(74) Mandataire: De Palmenaer, Roger

(56) Documents cités:
- EP-A- 0 294 909
- GB-A- 2 142 368
- GB-A- 2 142 368
- "PIG INTERNATIONAL" vol. 18, no. 5, Mai 1988, MOUNT MORRIS, ILL, USA page 14 LUDVIG SVENSSON INTERNATIONAL 'CEILINGS SCREENS'
- Derwent Publications Ltd., London, GB; AN 90-222775 & SU-A-1 513 327 (KRIVOSHEI) 7 Octobre 1989

## Description

L'invention est relative à une étable munie d'un déflecteur d'admission d'air de ventilation d'une étable, constitué d'un écran de protection souple, perméable aux gaz, monté devant une bouche de ventilation latérale d'un mur extérieur de l'étable, et maintenu tendu par un dispositif de tensionnement fixé le long du bord de l'écran de protection.

Elle concerne également le déflecteur d'admission d'air en tant que tel.

Elle trouve sa principale application dans des étables fermées, dans une porcherie ou un élevage de bétail ou de volaille et dans des granges et des hangars destinés au stockage de produits agricoles.

On connaît par le document GB-A-2142368 un déflecteur d'admission d'air pour la ventilation d'une étable, constitué d'un écran de protection souple perméable aux gaz et maintenu tendu par un dispositif de tensionnement.

L'écran constitue un store aéré déroulé plus ou moins complètement juste devant une ouverture latérale de l'étable.

La position du store permet de régler la ventilation d'une étable fermée. Celle-ci s'effectue généralement de manière naturelle au moyen de bouches d'admission réglables s'étendant de manière continue au-dessus de la paroi latérale d'une étable et d'un faite réglable sur le toit. La ventilation peut également être assurée par un ou plusieurs ventilateurs aménagés dans le toit.

L'air frais est admis, le plus souvent, par une entaille d'environ 2 cm de large par mètre de largeur de l'étable, entre la partie supérieure d'un clapet et le dormant de la bouche d'admission. Ce clapet est formé, le plus souvent, d'un panneau de copeaux de bois qui s'ouvre vers l'intérieur, sur charnières inférieures, par pivotement autour d'une axe horizontal. Le courant d'air frais est amené parallèlement à la pente du toit et l'air vicié est refoulé le long des faîtes du toit, de larges conduits d'aération ou de gaines d'aération, munies ou non de ventilateurs.

Des clapets opaques sont réalisés à partir de panneaux d'agglomérés qui présentent l'inconvénient qu'ils ne peuvent empêcher la formation de ponts thermiques et de courants d'air froids. L'air extérieur froid, qui selon l'orientation de l'étable s'engouffre plus ou moins violemment dans l'étable, retombe directement sur les animaux et provoque un rhume ou une bronchite. Les stores ou les volets sont fermés lorsque le vent souffle ou lorsque la température intérieure et la température extérieure diffèrent trop entre elles. La fermeture a souvent lieu trop tard ou trop lentement de sorte que le mal a déjà frappé avant que les volets ne soient fermés.

La présente invention a pour but d'éviter la formation des ponts thermiques susdits qui provoquent la toux et des rhumes chez les animaux. Elle présente comme solution, une étable munie d'un déflecteur d'admission d'air qui est constitué d'un écran de protection souple, perméable aux gaz, maintenu tendu par un dispositif de tensionnement, qui est monté en position inclinée devant une bouche d'admission à la partie supérieure d'une paroi latérale d'une étable, afin d'introduire le courant d'air frais parallèlement à la pente du toit et de répartir l'arrivée d'air frais uniformément sur toute la surface de l'étable. L'écran de protection est formé d'une toile aérée souple présentant des mailles de 0,1 à 0,9 mm d'ouverture.

Selon une particularité de l'invention le mur extérieur de l'étable retient le bord inférieur de l'écran de protection le long du côté inférieur de la bouche de ventilation et le dispositif de tensionnement soumet le bord supérieur de l'écran de protection à un effort de traction.

Ce système de fixation est efficace et très simple. L'écran de protection est disposé obliquement à une certaine distance d'une bouche de ventilation. Il n'empêche pas de régler l'amenée d'air frais en ouvrant plus ou moins le clapet vers l'intérieur.

Grâce à sa perméabilité aux gaz, l'écran de protection permet de réchauffer l'air frais extérieur par mélange avec de l'air intérieur chaud, ce qui permet de réduire les frais de chauffage en hiver.

L'écran de protection selon l'invention permet à l'éleveur de réaliser une économie appréciable du poste énergétique, ainsi que de faire progresser l'hygiène de son bétail et d'augmenter de cette manière, la productivité de son unité de production, grâce à un bon conditionnement de la climatisation dans l'étable. L'amenée de trop d'air frais provoque des courants d'airs froids, et celle de trop peu d'air frais a pour conséquence une ventilation insuffisante.

D'autres particularités et détails de l'invention seront décrites dans la description suivante faisant référence aux dessins ci-annexés, qui illustrent une forme de réalisation particulière du système de fixation selon l'invention.

Dans ces dessins :
- la figure 1 est une vue en coupe transversale d'une étable fermée;
- la figure 2 est une vue en plan d'un écran de protection, utilisé en tant que déflecteur d'admission d'air;
- la figure 3 est un schéma de principe du fonctionnement d'un écran de protection;
- la figure 4 est une vue transversale d'un profilé de fixation.

Les mêmes signes de référence désignent des éléments identiques et/ou analogues.

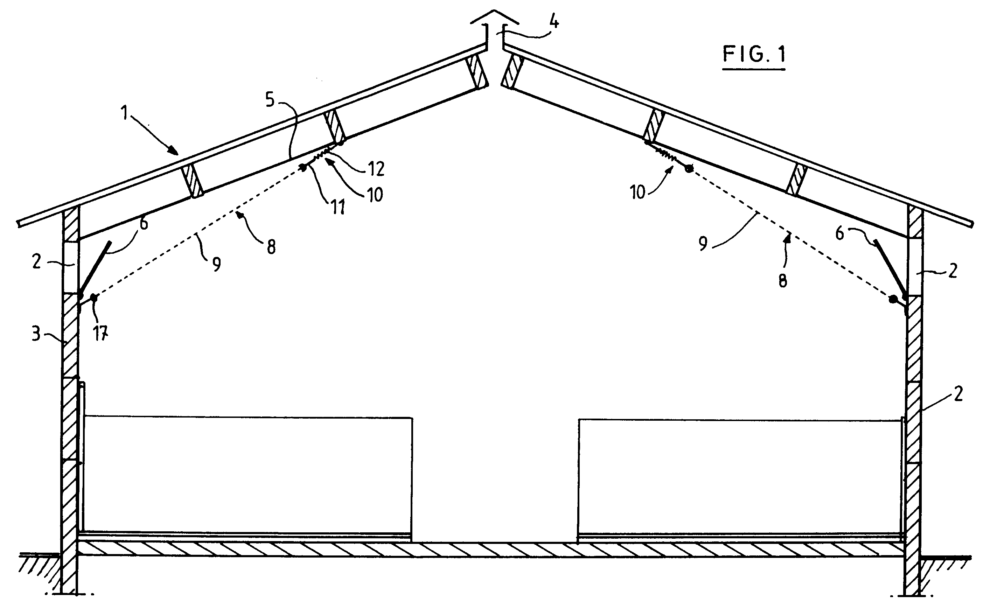

Comme montré dans la figure 1, la ventilation d'une étable fermée s'effectue par convection naturelle par des bouches réglables continues 2 aménagées dans la partie supérieure d'un mur extérieur 3 d'une étable 1 et des faîtes réglables 4 aménagés à distances égales dans la pente d'un toit 5.

Chaque bouche 2 est pourvue d'un clapet 6 généralement formé d'un panneau d'aggloméré qui s'ouvre vers l'intérieur sur des charnières inférieures 7 par pivotement autour d'un axe horizontal. Selon l'invention, un déflecteur d'admission d'air 8 est disposé devant la bouche de ventilation 2. Ce déflecteur 8 est constitué d'un écran de proctection souple maintenu tendu par un dispositif de tensionnement 9, qui est disposé en oblique devant la bouche de ventilation 2 devant un mur latéral 3 de l'étable, afin d'amener le courant d'air frais parallèlement à la pente du toit, de doser l'apport d'air frais progressivement et de le répartir uniformément sur toute la surface de l'étable.

On maintient l'élément de protection tendu grâce à un dispositif de tensionnement 10 qui comprend un câble de traction et un ressort de tensionnement. Une contrainte de traction prédéterminée dans le ressort 12 qui est appliqué sur une armature de renforcement du toit oblique et agit sur le câble de traction 11, excerce une force identique sur le bord supérieur de l'écran de protection 9, qui est fixé le long de l'appui du dormant de la bouche de ventilation 2, sur le mur latéral de l'étable, de sorte que l'étirement de l'écran de protection reste assuré.

Dans une forme de réalisation particulière, un bord au moins de l'écran de protection est renforcé par un liseré et une tige de matière synthétique 15 qui est emprisonnée dans le liseré.

Le système selon l'invention procure l'avantage que le liseré renforcé 14 et la tige de matière synthétique 15 des bords supérieur et inférieur de l'écran de protection 9 peuvent être coulissés dans la rainure d'un profilé métallique 17. De cette manière, on assure l'interchangeabilité de l'écran de protection.

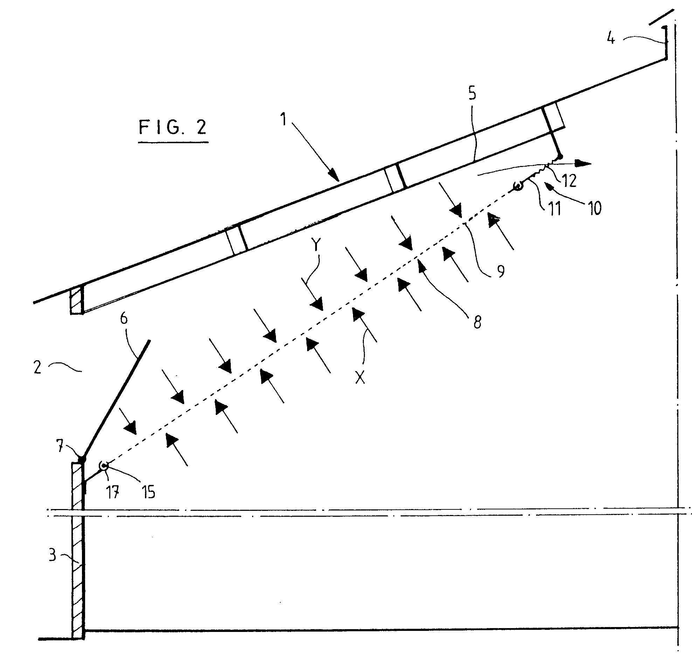

L'écran de protection est constitué de préférence d'une bâche aérée dont les mailles présentent une ouverture de 0,1 à 0,9 mm (figure 2).

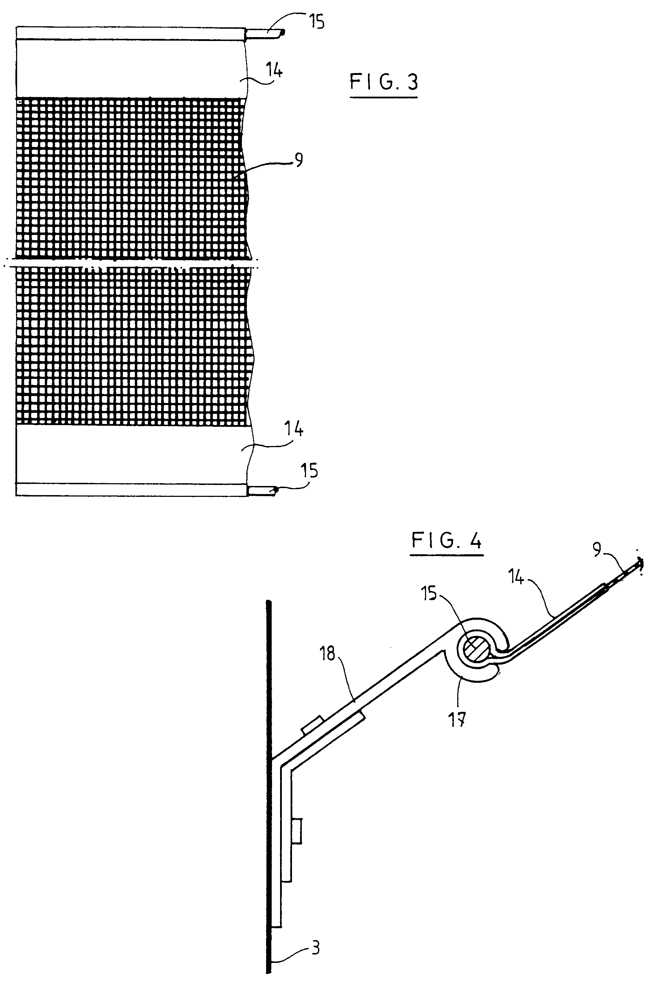

Grâce au réseau de mailles fines de l'écran de protection 9, une quantité déterminée d'air chaud intérieur s'élève dans le sens de la flèche X en traversant l'écran de protection 9, parce que cet air chaud est plus léger que l'air ambiant, et il se mélange, au-dessus de l'écran de protection 9, avec de l'air frais extérieur froid. L'air extérieur pénètre donc au-dessus de l'écran de protection 9 sous forme de mélange et s'infiltre en partie grâce à la pression du vent du côté extérieur en traversant l'écran de protection 9 en direction de la flèche Y et se répartit sur toute la surface de l'étable (figure 3).

L'invention est surtout utile, non seulement par journées chaudes alors que les soirées sont très fraîches, mais aussi par temps brumeux et par temps froid sans vent, mais orageux et brusque levée du vent.

Lorsque le vent se lève, la pression du vent crée, depuis l'extérieur, sous le toit, un effet venturi qui fait en sorte que l'air chaud soit aspiré le long du bord inférieur de l'écran de protection, vers le haut, au travers de l'écran de protection. Cet air chaud se mélange avec l'air extérieur et le mélange d'air pénètre le long du bord supérieur de l'écran de protection, en direction de la flèche Y, dans l'étable.

Le profil métallique 17 comprend une patte longitudinale, qui, comme illustré dans la figure 4 est fixée au mur extérieur 3 ou est appliquée au moyen d'un dispositif de tensionnement 10. L'écran de protection 9 peut aussi être maintenu tendu par un dispositif de tensionnement approprié à l'enroulement et au déroulement d'un écran d'ombrage.

Les dispositifs qui peuvent être mis en place à des endroits où la pesanteur ne peut être utilisée, conviennent particulièrement pour obtenir l'étirement de l'élément de protection.

La première forme de réalisation du système de fixation est avantageuse, parce qu'elle est très simple. Elle n'empêche pas de régler l'intensité de la ventilation en ouvrant plus ou moins une fenêtre guillotine ou une trappe.

## Revendications

1. Etable munie d'un déflecteur d'admission d'air de ventilation, constitué d'un écran de protection (9) souple, perméable aux gaz, monté devant une bouche de ventilation (2) latérale d'un mur extérieur (3) de l'étable, et maintenu tendu par un dispositif de tensionnement (10) fixé le long du bord de l'écran de protection (9), caractérisé en ce que l'écran de protection (9) est disposé obliquement devant ladite bouche latérale de ventilation (2) par un câble de traction (11) et un ressort de tensionnement (12) de manière à introduire le courant d'air frais parallèlement à la pente du toit de l'étable et de répartir l'arrivée d'air frais uniformément sur toute la surface de l'étable.

2. Etable selon la revendication 1, caractérisée en ce que le mur extérieur (3) de l'étable retient le bord inférieur de l'écran de protection le long du côté inférieur de la bouche de ventilation (2) et le dispositif de tensionnement (10) soumet le bord supérieur de l'écran de protection (9) à un effort de traction.

3. Etable selon la revendication 1 ou 2, caractérisée en ce que le dispositif de tensionnement (10) est appliqué sur une armature de renforcement du toit oblique et agit sur le câble de traction (11), qui est appliqué à un bord de l'écran de protection (9).

4. Etable selon l'une quelconque des revendications précédentes, caractérisée en ce que le mur extérieur (3) porte un profil métallique (17) fixé par un patte ou appliqué audit mur au moyen d'un dispositif de tensionnement (10).

5. Déflecteur d'admission d'air pour la ventilation d'une étable, constitué d'un écran de protection (9) souple, perméable aux gaz, destiné à être monté devant une bouche de ventilation (2) latérale d'un mur extérieur (3) de l'étable, et maintenu tendu par un dispositif de tensionnement (10) fixé le long du bord de l'écran de protection (9), caractérisé en ce que l'écran de protection (9) peut être disposé obliquement devant la bouche latérale à une certaine distance de celle-ci, de manière à amener le courant d'air frais parallèlement à la pente du toit (5) de l'étable et de le répartir uniformément sur toute la surface de l'étable et en ce qu'il est muni à cet effet dudit dispositif de tensionnement (10) constitué par un câble de traction (11) et un ressort de tensionnement (12).

6. Déflecteur selon la revendication 5, caractérisé en ce qu'un liseré (14) renforce un bord au moins de l'écran de protection (9) et emprisonne une tige (15) de matière synthétique.

7. Déflecteur selon la revendication 6, caractérisé en ce que le liseré susdit (14) de l'écran de protection (9) est collé, ou soudé thermiquement ou par haute fréquence.

8. Déflecteur selon la revendication 6 ou 7, caractérisé en ce que le liseré renforcé (14) et la tige de matière synthétique (15) des bords supérieur et inférieur de l'écran de protection (9) sont prévus pour coulisser dans la rainure d'un profilé métallique (17), afin d'assurer l'interchangeabilité de l'écran de protection (9).

9. Déflecteur selon l'une quelconque des revendications précédentes, caractérisé en ce que l'écran de protection (9) est constitué de plusieurs bandes jointives.

10. Déflecteur selon l'une quelconque des revendications précédentes, caractérisé en ce que l'écran de protection (9) est constitué d'une bâche aérée dont les mailles ont une ouverture de 0,1 à 0,9 mm.

## Claims

1. Stable equipped with a ventilation air inlet deflector consisting of a flexible, gas-permeable protective screen (9) mounted in front of a lateral ventilation opening (2) of an outside wall (3) of the stable and kept taut by a tensioning device (10) fixed along the edge of the protective screen (9), characterized in that the protective screen (9) is arranged obliquely in front of the said lateral ventilation opening (2) by a tension cable (11) and a tensioning spring (12) so as to introduce the current of fresh air parallel to the slope of the roof of the stable and to distribute the fresh air intake uniformly over the entire surface of the stable.

2. Stable according to Claim 1, characterized in that the outside wall (3) of the stable restrains the lower edge of the protective screen along the lower side of the ventilation opening (2) and the tensioning device (10) subjects the upper edge of the protective screen (9) to a tensile force.

3. Stable according to Claim 1 or 2, characterized in that the tensioning device (10) is applied on a reinforcing member of the oblique roof and acts on the tension cable (11), which is applied to one edge of the protective screen (9).

4. Stable according to any one of the preceding claims, characterized in that the outside wall (3) bears a metal section piece (17) fixed by a lug or applied to the said wall by means of a tensioning device (10).

5. Air inlet deflector for ventilating a stable, consisting of a flexible, gas-permeable protective screen (9) intended to be mounted in front of a lateral ventilation opening (2) of an outside wall (3) of the stable and kept taut by a tensioning device (10) fixed along the edge of the protective screen (9), characterized in that the protective screen (9) may be arranged obliquely in front of the lateral opening at a certain distance therefrom so as to bring the current of fresh air parallel to the slope of the roof (5) of the stable and to distribute it uniformly over the entire surface of the stable and in that, for this purpose, it is equipped with the said tensioning device (10) consisting of a tension cable (11) and a tensioning spring (12).

6. Deflector according to Claim 5, characterized in that edging (14) reinforces at least one edge of the protective screen (9) and encloses a rod (15) made of synthetic material.

7. Deflector according to Claim 6, characterized in that the aforementioned edging (14) of the protective screen (9) is bonded, or welded thermally or by high frequency.

8. Deflector according to Claim 6 or 7, characterized in that the reinforced edging (14) and the rod (15) made of synthetic material of the upper and lower edges of the protective screen (9) are designed to slide in the groove of a metal section piece (17) so as to make the protective screen (9) interchangeable.

9. Deflector according to any one of the preceding claims, characterized in that the protective screen (9) consists of several contiguous strips.

10. Deflector according to any one of the preceding claims, characterized in that the protective screen (9) consists of a ventilated canvas, the meshes of which have an opening of 0.1 to 0.9 mm.

## Patentansprüche

1. Stall, der mit einem Lufteinlaßdeflektor zur Belüftung versehen ist, bestehend aus einem luftdurchlässigen, biegsamen Schutzschirm (9), der vor einer seitlichen Belüftungsöffnung (2) einer Außenmauer (3) des Stalls angebracht ist und von einer Spannvorrichtung (10), die entlang des Randes des Schutzschirmes (9) befestigt ist, gespannt gehalten wird, dadurch gekennzeichnet, daß der Schutzschirm (9) schräg verlaufend vor der seitlichen Belüftungsöffnung (2) durch ein Zugseil (11) und eine Spannfeder (12) so angeordnet ist, daß der Frischluftstrom parallel zur Neigung des Daches des Stalles einströmt, und die ankommende Frischluft gleichförmig über der gesamten Fläche des Stalls verteilt wird.

2. Stall nach Anspruch 1, dadurch gekennzeichnet, daß die Außenmauer (3) des Stalls den inneren Rand des Schutzschirmes entlang der Unterseite der Belüftungsöffnung (2) hält und die Spannvorrichtung (10) den oberen Rand des Schutzschirmes (9) einer Zugkraft aussetzt.

3. Stall nach Anspruch 1 oder 2, dadurch gekennzeichnet, daß die Spannvorrichtung (10) an einem Verstärkungsanker des schräg verlaufenden Daches angreift und auf das Zugseil (11) einwirkt, das an einem Rand des Schutzschirmes (9) angreift.

4. Stall nach einem der vorhergehenden Ansprüche, dadurch gekennzeichnet, daß die Außenmauer (3) ein Metallprofil (17) trägt, das durch eine Klaue befestigt oder mittels einer Spannvorrichtung (10) an der Mauer angebracht ist.

5. Lufteinlaßdeflektor zur Belüftung eines Stalles, bestehend aus einem luftdurchlässigen biegsamen Schutzschirm (9), der vor einer seitlichen Belüftungsöffnung (2) einer Außenmauer (3) des Stalles anbringbar ist und durch eine Spannvorrichtung (10), die längs des Randes des Schutzschirmes (9) befestigt ist, gespannt gehalten werden kann, dadurch gekennzeichnet, daß der Schutzschirm (9) vor der seitlichen Öffnung mit einem bestimmten Abstand zu dieser schräg verlaufend so angeordnet werden kann, daß der Frischluftstrom parallel zur Neigung des Daches (5) des Stalles einströmen und über der gesamten Fläche des Stalles gleichförmig verteilt werden kann, und daß er zu diesem Zweck mit einer Spannvorrichtung (10) versehen ist, die von einem Zugseil (11) und einer Spannfeder (12) gebildet wird.

6. Deflektor nach Anspruch 5, dadurch gekennzeichnet, daß eine Borte (14) mindestens einen Rand des Schutzschirmes (9) verstärkt und eine Stange (15) aus Kunststoff einschließt.

7. Deflektor nach Anspruch 6, dadurch gekennzeichnet, daß die besagte Borte (14) des Schutzschirmes (9) geklebt oder durch Wärme oder durch Hochfrequenz geschweißt ist.

8. Deflektor nach Anspruch 6 oder 7, dadurch gekennzeichnet, daß die verstärkte Borte (14) und die aus Kunststoff bestehende Stange (15) der oberen und unteren Ränder des Schutzschirmes (9) in der Nut eines Metallprofiles (17) gleitbar sind, um die Austauschbarkeit des Schutzschirmes (9) sicherzustellen.

9. Deflektor nach einem der vorhergehenden Ansprüche, dadurch gekennzeichnet, daß der Schutzschirm (9) von mehreren nebeneinanderliegenden Bändern gebildet wird.

10. Deflektor nach einem der vorhergehenden Ansprüche, dadurch gekennzeichnet, daß der Schutzschirm (9) von einer Belüftungsplane gebildet wird, deren Maschen eine Öffnung von 0,1 bis 0,9 mm haben.
